# EUROPEAN PATENT APPLICATION

(11) **EP 1 998 264 A1**
(43) Date of publication of application: **03.12.2008**
(21) Application number: 07714864.1
(22) Date of filing: 23.02.2007
(51) Int. Cl.: G06F 17/30, G10K 15/02

(54) **MUSICAL COMPOSITION SEARCHING DEVICE AND METHOD, AND COMPUTER PROGRAM**

(30) Priority: 23.02.2006 JP 2006047359
(71) Applicant: Pioneer Corporation, Tokyo 153-8654 (JP)
(72) Inventor: KODAMA, Yasuteru, Tsurugashima-shi, Saitama 3502288 (JP)
(74) Representative: Viering, Jentschura & Partner
(86) International application number: PCT/JP2007/053393
(87) International publication number: WO 2007/097419

(57) **Abstract**

A musical composition searching device (100) comprises first creating means (130) which creates a first vector corresponding to one of musical compositions according to the frequencies of *n* words (W1, W2, ... , Wn) appearing in the musical composition while placing the *n* words (W1, W2, ... , Wn) appearing in the musical compositions on a coordinate axis of an information space, second creating means (140) which creates a second vector corresponding to a word according to a total frequency determined by adding (i) a frequency at which one of the *n* words appears in combination with other words in the one musical composition and (ii) another frequency at which the one word appears in combination with other words in other musical compositions, and searching means (150, 160, etc.) which is used to search for a desired musical composition according to the vector difference between the first and second vectors.

## Description

### Technical Field

The present invention relates to a music search apparatus for and method of searching for a desired piece of music, from a plurality of pieces of music distributed through a network or stored in a database, and a computer program which makes a computer function as such a music search apparatus.

### Background Art

Recently, a lot of music data has been distributed through a network, such as an online karaoke and the Internet. In distributing such music data, for example, with an increase in the number of music pieces stored in a database owned by an information distributing apparatus, there has been increased a need for a searching method capable of searching for a desired music piece, more appropriately and quickly. Here, the "music piece" of the present invention is a concept including all music and music information that can be listened to by a user regardless of genre, such as rock, pops, enka or Japanese ballade, jazz, or classical music.

As a method of searching for the desired music piece from the plurality of music pieces, a method in which a user inputs a character string and in which a music piece including the character string in its lyrics is obtained as a search result, i.e. a search based on keywords, is performed generally. In this method, however, the user needs to input the same character string as the notation of words included in the lyrics, so that the convenience in use is not necessarily improved for the user.

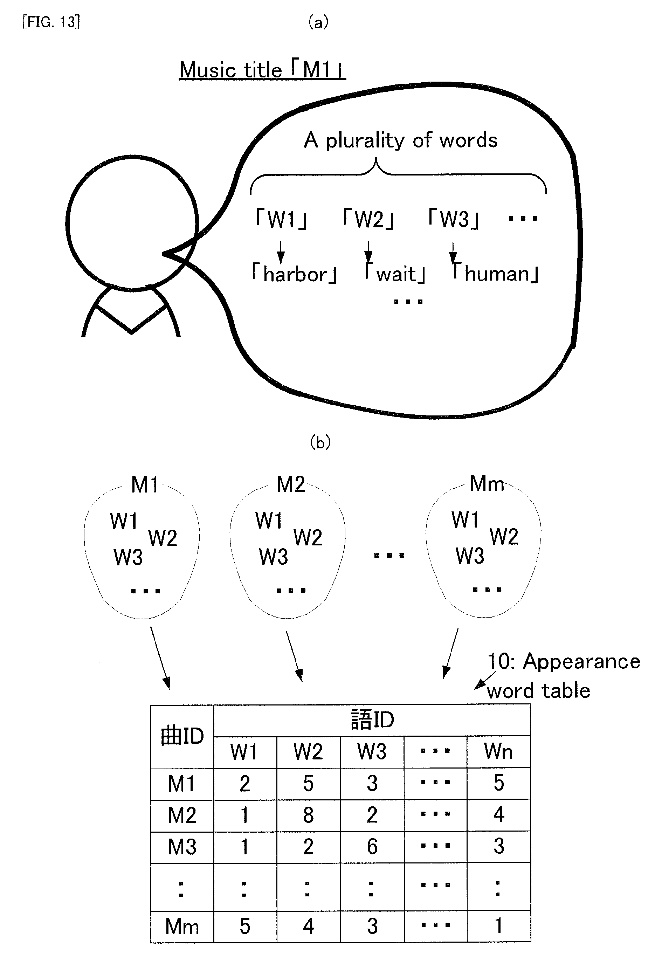

Thus, as disclosed in a patent document 1 or the like, there has been suggested a method for searching for the desired music piece on the basis of the frequencies of appearance of the plurality of words, by extracting words appearing in a plurality of music pieces. Specifically, as shown in FIG. 13(a), a word "W1", such as a "harbor", or the like, constituting a music piece "M1", is extracted, and values indicating the frequencies of appearance of a plurality of types of words are outputted in a table format (refer to an appearance word table 10 described later), as shown in FIG. 13(b).

Patent Document 1: Japanese Patent Application Laid Open No. 2003-271160

### Disclosure of Invention

### Subject to be Solved by the Invention

However, performing a principle component analysis only on the frequencies of appearance of the plurality of words in the patent document 1 or the like described above causes such a technical problem that it is hard to appropriately search for the desired music piece. Specifically, it causes such a technical problem that an error in semantic interpretation is increased in secondarily prepared analysis data, such as a dictionary of synonyms, required in the principle component analysis, for example, to thereby make it hard to appropriately search for the desired music piece.

In view of the aforementioned problems, it is therefore an object of the present invention to provide a music search apparatus and method capable of searching for a desired piece of music (or music piece) from a plurality of pieces of music, accurately and quickly, and a computer program which makes a computer function as such a music search apparatus.

### Means for Solving the Subject

### (Music Search Apparatus)

Hereinafter, the music search apparatus of the present invention will be explained.

The above object of the present invention can be achieved by a music search apparatus provided with: a first preparing device for preparing an n-dimensional first vector corresponding to one music piece on the basis of a frequency of appearance of each of n-th types of words (n is a natural number) (W1, W2, ..., Wn), in the one music piece of a plurality of music pieces, with the n-th types of words used as a coordinate axis of an n-dimensional information space, the n-th types of words appearing in the plurality of music pieces; a second preparing device for preparing an n-dimensional second vector corresponding to one word, on the basis of a total frequency obtained by adding (i) one frequency in which one word of the n-th types of words is combined with each word of the n-th types of words and appears in the one music piece and (ii) another frequency in which the one word is combined with the each word and appears in another music piece of the plurality of music pieces; and a searching device for searching for (or selecting) a desired music piece on the basis of a magnitude of a vector difference between the first vector and the second vector.

According to the music search apparatus of the present invention, the first preparing device prepares the n-dimensional first vector corresponding to one music piece on the basis of the frequency of appearance of each of the n-th types (n is a natural number) of words (e.g. W1, W2, ...,Wn), in the one music piece (e.g. W1) of the plurality of music pieces, with the n-th types of words used as the coordinate axis of an n-dimensional information space, the n-th types of words appearing in the plurality of music pieces. Here, the vector of the present invention may mean a point or position information on the coordinates indicated by the vector, for example. In particular, the vector may be expressed by a unit vector, or Norm's normalization process may be performed thereon.

Simultaneously with or in tandem with the preparation of the first vector, the second preparing device prepares the n-dimensional second vector corresponding to one word, on the basis of the total frequency obtained by adding (i) one frequency in which one word of the n-th types of words is combined with each word of the n-th types of words and appears in the one music peace and (ii) another frequency in which the one word is combined with the each word and appears in another music piece of the plurality of music pieces.

Then, the searching device searches for (or selects) the desired music piece on the basis of the magnitude of the vector difference between the first vector and the second vector. Here, the vector difference of the present invention means a difference based on a vector operation. In calculating the magnitude of the vector difference, for example, it may be calculated on the basis of a Eucliodean distance between two points indicated by two vectors. Moreover, the search in the present invention means selecting predetermined information, such as music pieces, uniquely associated on the basis of a predetermined condition and a predetermined word, i.e. a search word.

Specifically, if the magnitude of the vector difference between the first vector corresponding to one music piece and the second vector corresponding to one word is relatively small, i.e. the first vector is relatively close to the second vector, compared to another second vector corresponding to another word in the n-dimensional information space, it is possible to estimate that there is a high similarity between (i) a language world formed by one music piece (in other words, an imaginary world that people in the world can generally imagine by using the language) and (ii) a language world formed by combining the one word and each of the n-th types of words, on the basis of one word as standard. The "similarity" in the present invention is a concept meaning such a characteristic that can be considered to be almost or completely equivalent or equal. As described above, as compared to the case of considering the language world formed by using one word solely, in the case of considering the language world formed by using a combination of the one word and each of the n-th types of words (or words with the one word), it is possible to reflect a difference in semantic interpretation of languages.

More specifically, it is possible to estimate that (i) the n-dimensional first vector which has, as the elements, values of the frequencies of appearance of the n-th types of words constituting one music piece is quantitatively and qualitatively similar to (ii) the n-dimensional second vector which has, as the elements, values of summing the frequency of appearance of one word, which is combined with each of the n-th types of words including the one word, the one word being measured (or counted) by a unit of the music piece, in the plurality of music pieces, such as released many music pieces.

As a result, it is possible to search for the desired music piece, accurately and quickly, on the basis of the magnitude of the vector difference between the first vector and the second vector.

In one aspect of the music search apparatus of the present invention, it is further provided with a third preparing device for preparing a representative word table on which a representative word being representative (or word representative) of the one music piece corresponding to the first vector, is registered as the one word if the vector difference has the smallest magnitude, the searching device searching for the one music piece as the desired music piece, on the basis of a comparison of a desired key word with the one word registered on the representative word table.

According to this aspect, it is possible to search for the desired music piece corresponding to the desired key word, accurately and more quickly, on the basis of the comparison between the key word and the one word registered on the representative word table. In addition, since the one music piece is represented by the one word registered on the representative word table, it is possible to realize quicker searching, as compared to the case where it is represented by a plurality of words.

In another aspect of the music search apparatus of the present invention, the first preparing device further prepares a plurality of first vectors corresponding to the respective plurality of music pieces, in a table format (an appearance word table), the second preparing device further prepares a plurality of second vectors (one word) corresponding to the respective n-th types of words, in a table format (a joint appearance word table), and the searching device searches for one music piece corresponding to one of first vectors (corresponding to one of the plurality of music pieces) as the desired music piece if the vector difference between one of second vectors (corresponding to one of the plurality of words) and the one of first vectors has the smallest magnitude, the one of second vectors corresponding to one of the n-th types of words, which is the same or same meaning as a desired key word.

According to this aspect, it is possible to search for the desired music piece corresponding to the one word, which is the same or the same meaning as the desired key word, accurately and more quickly, on the basis of the plurality of first vectors prepared in the table format and the plurality of second vectors prepared in the table format. Here, the "same" in the present invention means such a character that it is the same formally and that it is the same practically.

In an aspect associated with the searching device described above, the searching device may search for the plurality of music pieces corresponding to the respective plurality of first vectors, as the desired music piece, if the magnitude of the vector difference between the one of second vectors and the plurality of first vectors is in a predetermined range.

By virtue of such construction, it is possible to search for the desired plurality of music pieces corresponding to the one word, which is the same as the desired key word, accurately and quickly, on the basis of the magnitude of the vector difference which is in the predetermined range.

In an aspect associated with the searching device described above, the searching device (i) may search for another music piece corresponding to another first vector (another music piece) as the desired music piece if the vector difference between another second vector (another word) and the another first vector (another music piece) has the smallest magnitude, the another second vector corresponding to another word of the n-th types of words, and (ii) may search for the one or another music piece as the desired music piece if the magnitude of the vector difference between the one of second vectors (one word) and the another second vector (another word) is in a predetermined range.

By virtue of such construction, it is possible to search for the desired one or another music pieces corresponding to the one word, which is the same as the desired key word, accurately and quickly, on the basis of the magnitude of the vector difference between the one of second vectors and the another second vector, which is in the predetermined range.

In another aspect of the music search apparatus of the present invention, it is further provided with an inputting device for inputting a desired key word, the searching device searches for the desired music piece on the basis of the magnitude of the vector difference between the second vector and the first vector, the second vector corresponding to the one word, which is the same or same meaning as the inputted key word.

According to this aspect, it is possible to search for the desired music piece, accurately and more quickly, on the basis of the one word, which is the same or the same meaning as the inputted key word.

In another aspect of the music search apparatus of the present invention, (i) the first preparing device prepares the first vector (one music piece) by grouping the plurality of music pieces on the basis of attributes (genre, times, users) of the plurality of music pieces, in addition to or in replace of (in other words, and/or) (ii) the second preparing deice prepares the second vector (one word) by grouping the n-th types of words on the basis of attributes (genre, times, users) of the n-th types of words.

According to this aspect, it is possible to search for the desired music piece, accurately and more quickly, on the basis of the various attributes, such as genre, times, and users, of the plurality of music pieces and the various attributes, such as genre, times, and users, of the n-th types of words.

In another aspect of the music search apparatus of the present invention, it is further provided with: a memory device for storing the plurality of music pieces; and an extracting device for extracting the n-th types of words appearing the plurality of music pieces stored, the first preparing device preparing the first vector on the basis of the n-th types of words extracted, the second preparing device preparing the second vector on the basis of the n-th types of words extracted.

According to this aspect, it is possible to search for the desired music piece corresponding to the desired key word, accurately and more quickly, on the basis of the memory device and the extracting device.

### (Music Search Method)

Hereinafter, the music search apparatus of the present invention will be explained.

The above object of the present invention can be also achieved by a music search method provided with: a first preparing process of preparing an n-dimensional first vector corresponding to one music piece on the basis of a frequency of appearance of each of n-th types of words (n is a natural number) (W1, W2, ..., Wn), in the one music piece of a plurality of music pieces, with the n-th types of words used as a coordinate axis of an n-dimensional information space, the n-th types of words appearing in the plurality of music pieces; a second preparing process of preparing an n-dimensional second vector corresponding to one word, on the basis of a total frequency obtained by adding (i) one frequency in which one word of the n-th types of words is combined with each word of the n-th types of words and appears in the one music piece and (ii) another frequency in which the one word is combined with the each word and appears in another music piece of the plurality of music pieces; and a searching process of searching for (or selecting) a desired music piece on the basis of a magnitude of a vector difference between the first vector and the second vector.

According to the music search method of the present invention, it is possible to receive the various benefits owned by the music search apparatus of the present invention described above.

Incidentally, in response to the various aspects owned by the music search apparatus of the present invention described above, the music search method of the present invention can also adopt various aspects.

### (Computer Program)

Hereinafter, the computer program of the present invention will be explained.

The above object of the present invention can be also achieved by a computer program for controlling a computer provided for the music search apparatus of the present invention described above (including its various aspects), the computer program making the computer function as at least one portion of the first preparing device, the second preparing device, and the searching device.

According to the computer program of the present invention, the music search apparatus of the present invention described above can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects owned by the music search apparatus of the present invention described above, the computer program of the present invention can also adopt various aspects.

The above object of the present invention can be also achieved by a computer program product in a computer-readable medium for tangibly embodying a program of instructions executable by a computer provided in the music search apparatus of the present invention described above (including its various aspects), the computer program product making the computer function as at least one portion of the first preparing device, the second preparing device, and the searching device.

According to the computer program product of the present invention, the music search apparatus of the present invention described above can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the music search apparatus of the present invention described above.

These effects and other advantages of the present invention will become more apparent from the embodiments explained below.

As explained above, according to the music search apparatus and method of the present invention, it is provided with the first preparing device (or process), the second preparing device(or process), and the searching device(or process). As a result, it is possible to search for the desired music piece, accurately and quickly, on the basis of the magnitude of the vector difference between the first vector and the second vector.

Moreover, according to the computer program of the present invention, since it makes the computer function as the music search apparatus of the present invention described above, it enables the music search apparatus described above to search for the desired music piece, accurately and quickly, on the basis of the magnitude of the vector difference between the first vector and the second vector.

### Brief Description of Drawings

[FIG. 1] FIG. 1 is a block diagram showing the basic structure of a music search apparatus 100 in an embodiment.
[FIG. 2] FIG. 2 is a flowchart showing a pre-process including a first preparation process and a second preparation process, by the music search apparatus in the embodiment.
[FIG. 3] FIG. 3 is a table showing an appearance word table, which is one specific example of a plurality of first vectors, in the embodiment.
[FIG. 4] FIG. 4 is a table showing a joint appearance word table, which is one specific example of a plurality of second vectors, in the embodiment.
[FIG. 5] FIGs. 5 are a plurality of tables showing a transition in preparing the joint appearance word table, which is one specific example of the plurality of second vectors, in the embodiment (FIG. 5(a), FIG. 5(b), and FIG. 5(c)).
[FIG. 6] FIG. 6 is a table showing one specific example of a representative word table in the embodiment.
[FIG. 7] FIGs. 7 are a graph indicating a two-dimensional information space as one example of a n-dimensional information space (FIG. 7(a)), a table showing an appearance word table 10 corresponding to the two-dimensional information space (FIG. 7(b)), and a table showing a joint appearance word table 20 corresponding to the two-dimensional information space (FIG. 7(c)), in the embodiment.
[FIG. 8] FIG. 8 is a flowchart showing a post-process displaying a result of a search for music by the music search apparatus in the embodiment.
[FIG. 9] FIG. 9 is a block diagram showing the basic structure of a music search apparatus 100 in another embodiment.
[FIG. 10] FIG. 10 is a flowchart showing a pre-process including a first preparation process and a second preparation process, by the music search apparatus in the another embodiment.
[FIG. 11] FIG. 11 is a flowchart showing a post-process displaying a result of a search for music by the music search apparatus in the another embodiment. [FIG. 12] FIG. 12 is a table showing one specific example of an appearance word distance table in the another embodiment.
[FIG. 13] FIGs. 13 are a schematic diagram (FIG. 13(a)) and a table (FIG. 13(b)) showing a concept in which words constituting music appear in a general method.

### Description of Reference Codes

- 10: appearance word table
- 20: joint appearance word table
- 30: representative word table
- 40: appearance word distance table
- 100: music search apparatus
- 110: memory device
- 120: extraction device
- 130: first preparation device
- 140: second preparation device
- 150: calculation device
- 160: search device (or searching device)
- 170: input device
- 180: display device

### Best Mode for Carrying Out the Invention

Hereinafter, the best mode for carrying out the invention will be explained in each embodiment in order, with reference to the drawings.

### (1) Embodiment of music search apparatus

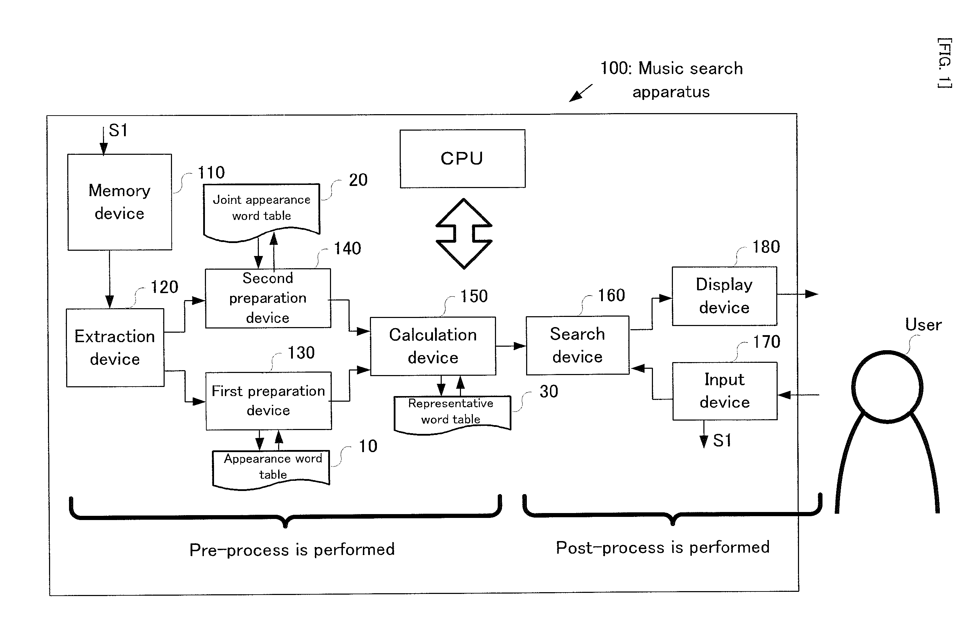

With reference to FIG. 1 to FIG. 8, a music search apparatus in an embodiment of the present invention will be explained.

### (1-1) Basic structure

Firstly, with reference to FIG. 1, the basic structure of a music search apparatus 100 in the embodiment will be explained. FIG. 1 is a block diagram showing the basic structure of the music search apparatus 100 in the embodiment.

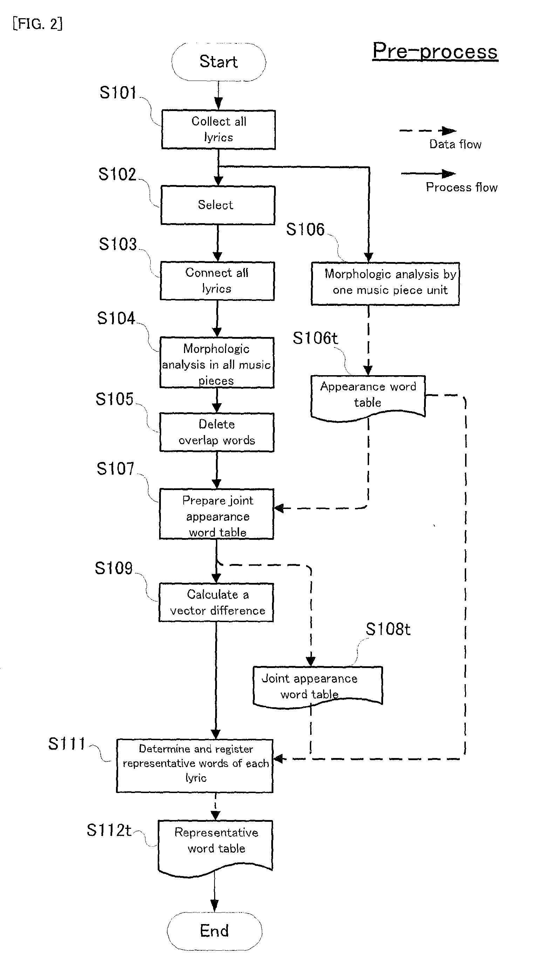

As shown in FIG. 1, the music search apparatus 100 in the embodiment is provided with: a memory device 110; an extraction device 120; a first preparation device 130 for preparing an appearance word table described later; a second preparation device 140 for preparing a joint appearance word table described later; a calculation device 150 (i.e. one specific example of the third preparing device of the present invention) for performing various calculation processes on the basis of the prepared appearance word table and joint appearance word table; a search device 160 (or a searching device 160) for searching for music; an input device 170 for inputting a user's desired word; and a display device 180 for displaying a result of the search for music. In particular, a pre-process of preparing first and second vectors described later is performed mainly by the memory device 110, the extraction device 120, the first preparation device 130, the second preparation device 140, and the calculation device 150. In addition, a post-process of displaying a result of the search for music described later is performed mainly by the search device 160, the input device 170, and the display device 180. In particular, the input device may allow a user to input a word. Alternatively, the input device may allow a user to input the content of music (refer to a music piece S1 in FIG. 2) and output it to the memory device.

Incidentally, one portion of the music search apparatus may be formed of a music distributing apparatus (i.e. music distribution server) for distributing music through a network, such as the Internet, for example, which performs the pre-process. In addition, another portion of the music search apparatus may be formed of a music reproducing apparatus for receiving music with a communication function, for example, which performs the post-process. Moreover, the music search apparatus in the embodiment can adopt various forms, such as a part or all of audio equipment, on-vehicle audio equipment, a car navigation apparatus, and mobile music equipment, or an external function expanding apparatus for adding functions thereto. Alternatively, a plurality of music pieces stored in the music search apparatus in the embodiment may be music pieces included in commercially available music software recorded in advance on a CD, a DVD, or the like, or may be music pieces downloaded by a user from a predetermined server or the like or distributed from a predetermined server through a network, such as the Internet. In case of the music pieces obtained by a user by downloading or distributing them as described above, the music pieces may be recorded and saved on a recording medium, such as a HD (Hard Disk), a CD-ROM, a CD-RW, a DVD-ROM, or a DVD-RAM, on the user's side.

### (1-2) Operation principle

### - Pre-process preparing first and second vectors -

Next, with reference to FIG. 2, as the operation principle of the music search apparatus 100 in the embodiment, the pre-process will be explained, wherein the pre-process includes a process of preparing an appearance word table 10 as one specific example of first vectors and a process of preparing a joint appearance word table 20 as one specific example of second vectors. FIG. 2 is a flowchart showing the pre-process including the first preparation process and the second preparation process, by the music search apparatus in the embodiment. Incidentally, in FIG. 2, solid-line arrows indicate a process flow, and dashed-line arrows indicate an information flow. Moreover, for convenience of explanation, in each process, a process with "t" appended to the tail of a step number means the input or output of a table to the memory device.

As shown in FIG. 2, under the control of a CPU (Central Processing Unit) of the music search apparatus 100 in the embodiment, for example, the lyrics of almost all the released music pieces are stored and collected in the memory device 10 (step S101). Here, the lyrics related to the embodiment mean a plurality of words continuously appearing in the music and constituting logical information expressed by languages, such as a human voice.

Then, under the control of the CPU, a music piece considered to be lyric-centric is selected, rather than melody-centric (i.e. instrument-centric) such as quiet music, on the basis of the feature quantity of the plurality of music pieces stored (step S102). Here, the feature quantity in the embodiment is a predetermined physical variable indicating the features of music, such as a rate of change and average in a sound pressure level of an audio signal, a rate of change in chord, the number of beats per minute, and the maximum amplitude of the audio signal. Incidentally, the lyrics of all the selected music pieces are the target for the first and second preparation processes in the embodiment.

Then, under the control of the CPU, all the lyrics of all the selected music pieces are connected. Incidentally, in this connection, repeatedly appearing lyrics may be included and connected (step S103).

Then, under the control of the CPU, the extraction device 120 performs a process of extracting all the words appearing in the lyrics of all the selected music pieces, i.e. a morphologic analysis (step S104). Here, the process of the morphologic analysis in the embodiment means an information process of deconstructing all the inputted text information by a unit of word and outputting all the words with information indicating a word class.

Then, under the control of the CPU, a word that does not express the features of music constructed by the lyrics, such as a word having a less number of appearances than a predetermined threshold value or a word whose meaning cannot be analyzed, is deleted for careful selection (step S105). In addition, a process of grouping words with distinctly-different meanings or the like may be performed by combining words. Specifically, combining one word with other words located in front and in rear thereof, such as a word having a negative particle immediately after the word, may cause another word. This allows a representative word representative of music, described later, to be determined more clearly and more highly accurately. Incidentally, all the carefully-selected words are the target for the first and second preparation processes in the embodiment.

Simultaneously with or in tandem with the steps S102 to S105 described above, under the control of the CPU, the extraction device 120 extracts the appearance words and performs the morphologic analysis, with one music piece as a unit (step S106). In particular, in order to reduce an influence by the spread of the words extracted in one music piece, the total number of the words extracted in one music piece may be set to a constant value.

Then, under the control of the CPU, the first preparation device prepares the appearance word table 10 as one specific example of the first vectors in the embodiment, and the memory device 110 stores it (step S106t). Incidentally, the details of the appearance word table 10 will be described later.

Then, under the control of the CPU, the second preparation device prepares the joint appearance word table 20 as one specific example of the second vectors in the embodiment (step S107). Incidentally, the details of the joint appearance word table 20 will be described later.

Then, under the control of the CPU, the memory device 110 stores the joint appearance word table 20 (step S108t).

Then, under the control of the CPU, the calculation device 150 calculates the magnitude of a vector difference between a column vector constituting the appearance word table 10 (one specific example of the first vectors described later) and a column vector constituting the joint appearance word table 20 (one specific example of the second vectors described later) (step S109).

Then, under the control of the CPU, the calculation device 150 prepares a representative word table 30 on the basis of the magnitude of the vector difference calculated (step S11). Incidentally, the details of the representative word table 30 will be described later.

Then, under the control of the CPU, for example, the memory device 110 stores the representative word table prepared by the calculation device 150 (step S112t).

### (1-3) One specific example of a plurality of first vectors

### - Appearance word table -

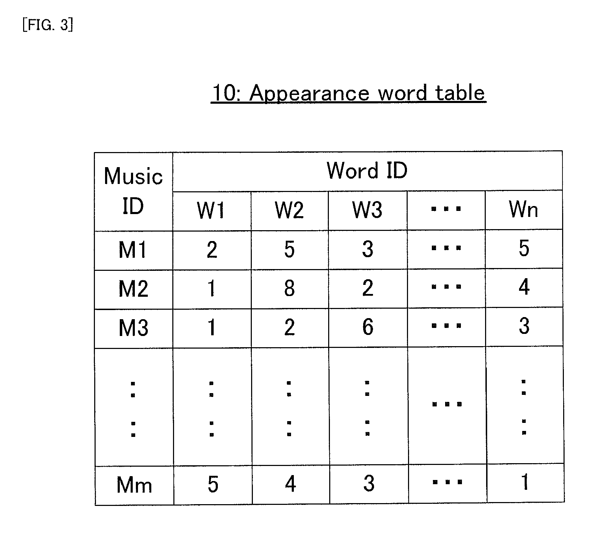

Now, with reference to FIG. 3, the appearance word table as one specific example of the plurality of first vectors in the embodiment will be explained. FIG. 3 is a table showing the appearance word table, which is one specific example of the plurality of first vectors, in the embodiment.

As shown in FIG. 3, the appearance word table 10 is provided with a plurality of column vectors, each corresponding to respective one of the plurality of music pieces, from a "first line" to an "m-th line (wherein "m" is a natural number)". Specifically, in the "first line", the appearance word table 10 has an n-dimensional vector (wherein "n" is a natural number) corresponding to a music piece "M1" with a music ID (Identification number) of "M1", i.e. a vector M1 (2, 5, 3, ..., 5). Incidentally, each of the elements of the n-dimensional vector indicates the frequency of respective one of n-th types of words (i.e. words "W1" to "Wn" indicated by word IDs "W1" to "Wn", respectively) appearing in one music piece. Moreover, the vector related to the appearance word table in the embodiment may be indicated by a unit vector with a magnitude of "1", for example. Alternatively, it may be normalized on the basis of a Norm method. Alternatively, it may be multiplied by a predetermined coefficient determined on the basis of the sum of the appearance frequencies.

Then, in the "second line", the appearance word table 10 has a vector M2 (1, 8, 2, ..., 4), which is an n-dimensional vector corresponding to a music piece "M2". In the "third line", the appearance word table 10 has a vector M3 (1, 2, 6, ..., 3), which is an n-dimensional vector corresponding to a music piece "M3". Subsequently, in substantially the same manner, in the "m-th line", the appearance word table 10 has a vector Mm (5, 4, 3, ..., 1) corresponding to a music piece "Mm".

On the basis of the appearance word table, the joint appearance word table as one specific example of the plurality of second vectors is prepared, in the embodiment.

### (1-4) One specific example of a plurality of second vectors

### - Joint appearance word table -

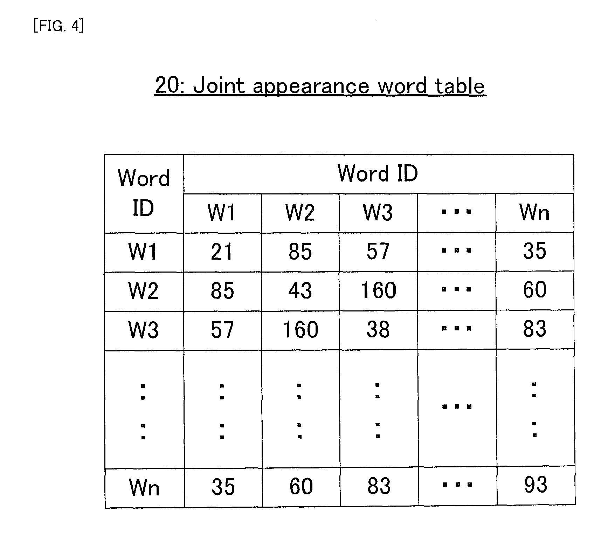

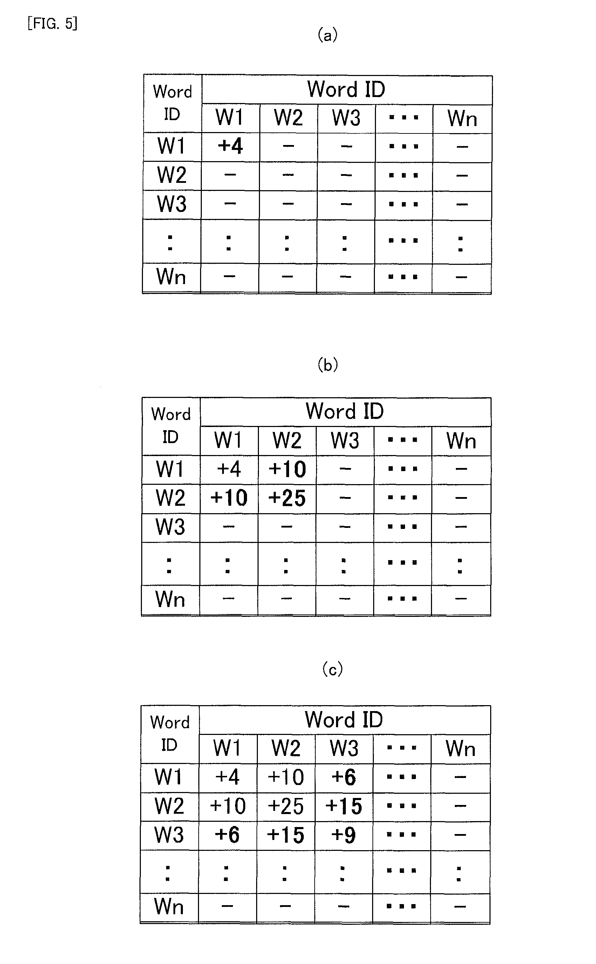

Here, with reference to FIG. 3 described above, as occasion demands, in addition to FIG. 4 and FIG. 5, an explanation will be given on the joint appearance word table as one specific example of the plurality of second vectors in the embodiment. FIG. 4 is a table showing the joint appearance word table, which is one specific example of the plurality of second vectors, in the embodiment.

As shown in FIG. 4, the joint appearance word table 20 is provided with a plurality of column vectors, each corresponding to respective one of the plurality of n-th types of words, from a "first line" to an "n-th line". Specifically, in the "first line", the joint appearance word table 20 has an n-dimensional vector corresponding to the word "W1", i.e. a vector W1 (21, 85, 57, ..., 35). Incidentally, each of the elements of the n-dimensional vector indicates a sum value obtained by adding all the frequencies, which are from the first frequency of one word of the n-th types of words (e.g. the word "W1"), which is combined with each word of the n-th types of words (i.e. the words "W1" to "Wn"), appearing in the first music (e.g. the music piece "M1"), to the m-th frequency of this one word, which is combined with each word of the n-th types of words, appearing in the m-th music piece. Moreover, the vector related to the joint appearance word table in the embodiment may be also indicated by a unit vector with a magnitude of "1", for example, as described above. Alternatively, it may be normalized on the basis of the Norm method.

### (1-4-1) Method of preparing a joint appearance word table

Now, with reference to FIG. 3 described above, as occasion demands, in addition to FIGs. 5, an explanation will be given on a method of preparing the joint appearance word table 20 on the basis of the appearance word table 10 described above. FIGs. 5 are a plurality of tables showing a transition in preparing the joint appearance word table, which is one specific example of the plurality of second vectors, in the embodiment (FIG. 5(a), FIG. 5(b), and FIG. 5(c)). Incidentally, in the method of preparing the joint appearance word table 20, it is assumed that the joint appearance word table 20 is initialized, and that all the elements of the joint appearance word table 20 are "0".

As shown in FIG. 5(a), in the "first line" of the joint appearance word table 20, when the first element owned by the initialized vector W1 (0, 0, 0, ..., 0) is prepared, firstly, the first element of the vector M1 (2, 5, 3, ..., 5) in the appearance word table 10 is focused. Since the first element is the frequency of appearance of the word "W1" of "2", the square value of "2" is added to the value of the first element of the initialized vector W1 (0, 0, 0, ..., 0), to thereby prepare the vector W1 (+4, 0, 0, ..., 0).

Then, as shown in FIG. 5(b), in the "first line" of the joint appearance word table 20, when the second element owned by the abovementioned vector "W1" (+4, 0, 0, ..., 0) is prepared, the first element and the second element of the vector M1 (2, 5, 3, ..., 5) in the appearance word table 10 are focused. From the first element and the second element, it is possible to calculate the frequency of appearance of the word "W1" and the word "W2" combined. Therefore, the value of the product "10 (=2×5)" of the first element's value "2" and the second element's value "5" is added to the value of the second element of the vector W1 (+4, 0, 0, ..., 0) described above, to thereby prepare the vector W1 (+4, +10, 0, ..., 0). On the other hand, changing the point of view on the basis of the word "W2" as a standard, it is also possible to calculate the frequency of appearance of the word "W2" and the word "W1"combined, from the second element and the first element of the vector M1 (2, 5, 3, ..., 5). Therefore, the value of the product "10 (=5×2)" of the second element's value "5" and the first element's value "2" is added to the value of the first element of the initialized vector W2 (0, 0, 0, ..., 0), to thereby prepare the vector W2 (+10, 0, 0, ..., 0).

In addition, as shown in FIG. 5(b), in the "second line" of the joint appearance word table 20, when the second element owned by the vector W2 (+10, 0, 0, ..., 0) described above is prepared, the second element of the vector M1 (2, 5, 3, ..., 5) in the appearance word table 10 is focused. Since the second element is the frequency of appearance of the word "W2" of "5", the square value of 5 is added to the value of the second element of the vector W2 (+10, 0, 0, ..., 0), to thereby prepare the vector W1 (+10, +25, 0, ..., 0).

As a result, as shown in FIG. 5(b), in the "first line" of the joint appearance word table 20, the vector W1 (+4, +10, 0, ..., 0) is prepared. In addition to this, in the "second line" of the joint appearance word table 20, the vector W2 (+10, +25, 0, ..., 0) is prepared.

Then, as shown in FIG. 5(c), in the "first line" of the joint appearance word table 20, when the third element owned by the vector W1 (+4, +10, 0, .., 0) described above is prepared, the first element and the third element of the vector M1 (2, 5, 3, ..., 5) in the appearance word table 10 are focused. From the first element and the third element, it is possible to calculate the frequency of appearance of the word "W1" and the word "W3" combined. Therefore, the value of the product "6 (=2×3)" of the first element's value "2" and the third element's value "3" is added to the value of the third element of the vector W1 (+4, +10, 0, ..., 0) described above, to thereby prepare the vector W1 (+4, +10, +6, ..., 0). On the other hand, changing the point of view on the basis of the word "W3"as a standard, it is also possible to calculate the frequency of appearance of the word "W3" and the word "W1" combined, from the third element and the first element of the vector M1 (2, 5, 3, ..., 5). Therefore, the value of the product "6 (=3×2)" of the third element's value "3" and the first element's value "2" is added to the value of the first element of the initialized vector W3 (0, 0, 0, ..., 0), to thereby prepare the vector W3 (+6, 0, 0, ..., 0).

Substantially in the same manner, as shown in FIG. 5(c), in the "second line" of the joint appearance word table 20, when the third element owned by the vector W2 (+10, +25, 0, .., 0) described above is prepared, the second element and the third elements of the vector M1 (2, 5, 3, ..., 5) in the appearance word table 10 are focused. From the second element and the third element, it is possible to calculate the frequency of appearance of the word "W2" and the word "W3" combined. Therefore, the value of the product "15 (=5×3)" of the second element's value "5" and the third element's value "3" is added to the value of the third element of the vector W2 (+10, +25, 0, ..., 0) described above, to thereby prepare the vector W2 (+10, +25, +15, ..., 0). On the other hand, changing the point of view on the basis of the word "W3" as a standard, it is also possible to calculate the frequency of appearance of the word "W3" and the word "W2" combined, from the third element and the second element of the vector M1 (2, 5, 3, ..., 5). Therefore, the value of the product "15 (=3×5)" of the third element's value "3" and the second element's value "5" is added to the value of the second element of the abovementioned vector W3 (+6, 0, 0, ..., 0), to thereby prepare the vector W3 (+6, +15, 0, ..., 0).

In addition, as shown in FIG. 5(c), in the "third line" of the joint appearance word table 20, when the third element owned by the vector W3 (+6, +15, 0, .., 0) described above is prepared, the third element of the vector M1 (2, 5, 3, ..., 5) in the appearance word table 10 is focused. Since the third element is the frequency of appearance of the word "W3" of "3", the square value of 3 is added to the value of the third element of the vector "W3" (+6, +15, 0, ..., 0), to thereby prepare the vector W3 (+6, +15, +9, ..., 0).

As a result, as shown in FIG. 5(c), in the "first line" of the joint appearance word table 20, the vector W1 (+4, +10, +6, ..., 0) is prepared. In addition to this, in the "second line" of the joint appearance word table 20, the vector W2 (+10, +25, +15, ..., 0) is prepared. And in the "third line" of the joint appearance word table 20, the vector W3 (+6, +15, +9, ..., 0) is prepared.

In the joint appearance word table 20 calculated in the above manner, the value of (Wx, Wy) and the value of (Wy, Wx) are equal, so that it is possible to reduce a memory capacity if available data (or necessary data) is recorded (or stored) into a memory device, at least.

### (1-4) One specific example of a plurality of second vectors

### - Joint appearance word table (rest) -

Back in FIG. 4 again, the joint appearance word table 20 prepared on the basis of the aforementioned method, has an n-dimensional vector W2 (85, 43, 160, ..., 60) corresponding to the word "W2" in the "second line". The joint appearance word table 20 has an n-dimensional vector W3 (57,160, 38, ..., 83) corresponding to the word "W3" in the "third line". Subsequently, in substantially the same manner, the joint appearance word table 20 has an n-dimensional vector Wn (35,60, 83, ..., 93) corresponding to the word "Wn" in the "n-th line".

### (1-5) One specific example of a representative word table

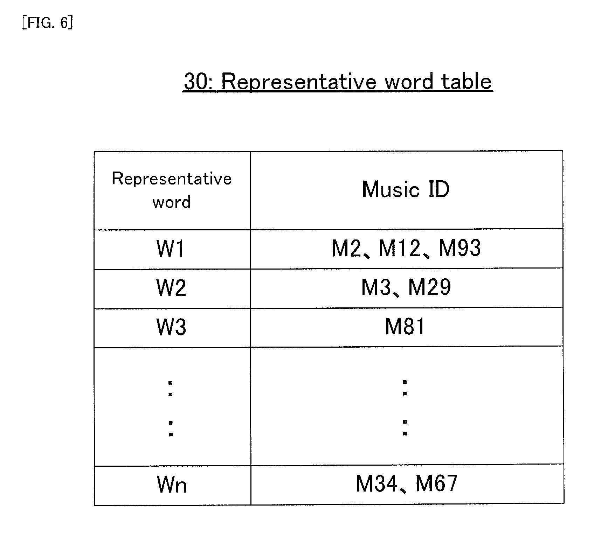

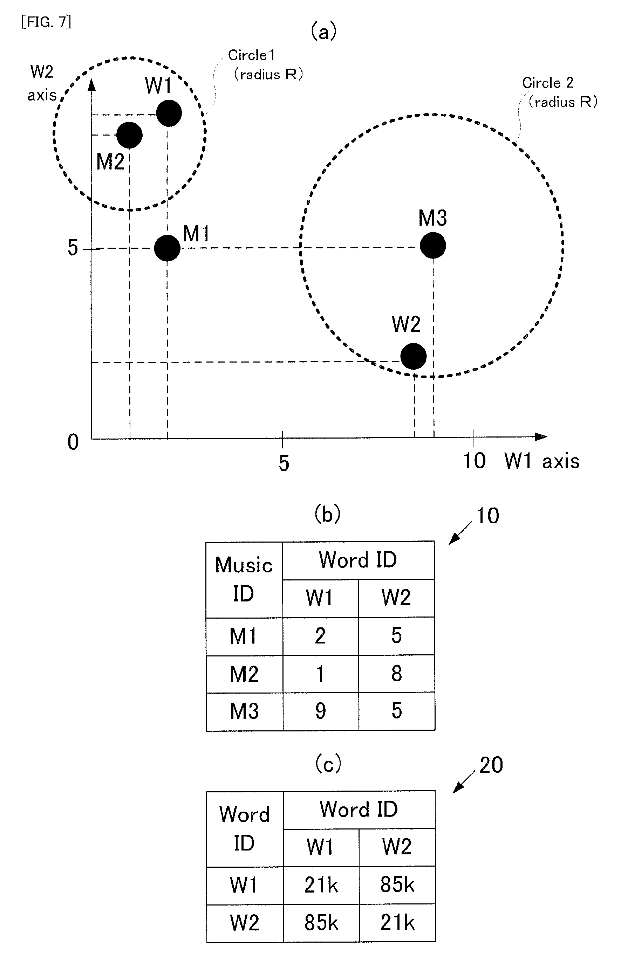

Next, with reference to FIG. 6 and FIGs. 7, one specific example of the representative word table in the embodiment will be explained. FIG. 6 is a table showing one specific example of the representative word table in the embodiment.

As shown in FIG. 6, the representative word table 30 is prepared on the basis of the appearance word table 10 and the joint appearance word table 20 described above. On the representative word table 30, a representative word being representative of music pieces, is registered. In this method of registering the representative word, firstly, each of the magnitude of the vector difference between (i) a "p-th" (wherein "p" is a natural number) vector of the plurality of column vectors (i.e. the vectors M1 to Mm), corresponding to the respective plurality of music pieces and owned by the appearance word table 10, and (ii) a "q-th" (wherein "q" is a natural number) vector of the plurality of column vectors (i.e. the vectors W1 to Wn), corresponding to the respective n-th types of words and owned by the joint appearance word table 20, is compared. Then, if the "p-th" vector and the "q-th" vector have the smallest vector difference, the "p-th" vector and the "q-th" vector are considered to be similar, and a word "Wq" is registered as the representative word being representative of a music piece "Mp" corresponding to the "p-th" vector, on the representative word table 30.

Specifically, as shown in FIG. 6, on the representative word table 30, the word "W1" is registered as the representative word being representative of music pieces "M2", "M12", and "M93", and the word "W2" is registered as the representative word being representative of music pieces "M3" and "M29".

### (1-5-1) One kind of method of determining a representative word

Now, with reference to FIG. 3 and FIG. 4 described above, as occasion demands, in addition to FIGs. 7, an explanation will be given on one kind of method of determining the representative word in the embodiment. FIGs. 7 are a graph indicating a two-dimensional information space as one example of a n-dimensional information space (FIG. 7(a)), a table showing the appearance word table 10 corresponding to the two-dimensional information space (FIG. 7(b)), and a table showing the joint appearance word table 20 corresponding to the two-dimensional information space (FIG. 7(c)), in the embodiment. Incidentally in the joint word table 20 of Fig.7(c), each value of the elements are multiplied by predetermined coefficient value "k (e.g., "0.1")", respectively. And the two-dimensional information space is showed and by both vector element "W1" as horizontal axis (i.e., "W1" axis) and vector element "W2" as vertical axis (i.e., "W2" axis).

As shown in FIG. 7(a), the vector difference between the two-dimensional vector M2 (1, 8) (refer to FIG. 7(b)) and the two-dimensional vector W1 (21k, 85k) on the appearance word table 10, has the smallest magnitude, compared to the vector W2 (85k, 21k), so that the word "W1" is registered as the representative word being representative of the music piece "M2" corresponding to the vector M2 on the representative word table 30. Alternatively, the magnitude of the vector difference between the two-dimensional vector M2 (1, 8) and the two-dimensional vector W1 (21k, 85k) is within an area of a "circle 1" with the center of the vector M2 and a "radius R" of "2", as a predetermined range, so that the word "W1" is registered as the representative word being representative of the music piece "M2" corresponding to the vector M2 on the representative word table 30.

Moreover, in substantially the same manner, as shown in FIG. 7(a), the vector difference between the two-dimensional vector M3 (9, 5) (refer to FIG. 7(b), and the two-dimensional vector W2 (85k, 21k) on the appearance word table 10, has the smallest magnitude, compared to the vector W1 (21k, 85k), so that the word "W2" is registered as the representative word being representative of the music piece "M3" corresponding to the vector M3 on the representative word table 30. Alternatively, the magnitude of the vector difference between the two-dimensional vector M3 (9, 5) and the two-dimensional vector W2 (85k, 21k) is within an area of a "circle 2" with the center of the vector M3 and a "radius R" of "3.5", as a predetermined range, so that the word "W2" is registered as the representative word being representative of the music piece "M3" corresponding to the vector M3 on the representative word table 30.

In particular, when the representative word is determined, since the vector difference between the vector of one word and the vector of another word on the joint appearance word table, is within a predetermined range, the another word may be registered as the representative word of one music piece having the one word as the representative word.

### (1-5) One specific example of a representative word table (rest) -

Back in FIG. 6 again, on the representative word table 30 with the representative words registered on the basis of the aforementioned method, the word "W3" is registered as the representative word being representative of a music piece "M81", and the word "Wn" is registered as the representative word being representative of a music piece "M34" and a music piece "M67".

As a result, the search device has little or no need to perform a complicated process if having only the representative word table. Thus, for example, if the search device, the display device, and the input device are used as another portion, such as terminals of the music search apparatus, a load for performing various processes can be reduced in this another portion, and the desired music piece can be searched for, more quickly.

### (1-6) Operation principle

### - Post-process of displaying a result of the search for music -

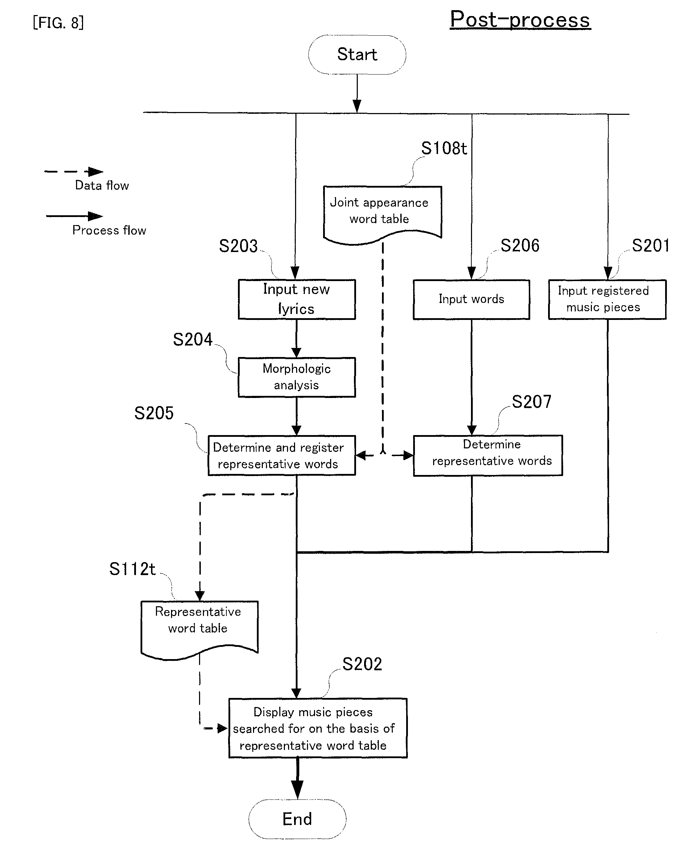

Next, with reference to FIG. 8, an explanation will be given on the post-process of displaying a result of the search for music, as the operation principle of the music search apparatus 100 in the embodiment. FIG. 8 is a flowchart showing the post-process displaying a result of the search for music by the music search apparatus in the embodiment. Incidentally, in FIG. 8, solid-line arrows indicate a process flow, and dashed-line arrows indicate an information flow. Moreover, for convenience of explanation, in each process, a process with "t" appended to the tail of a step number means the input or output of a table to the memory device.

### (1-6-1) In case of searching for a music piece similar to a registered music piece

As shown in FIG. 8, under the control of the CPU, the input device 170 inputs identification information, such as a music ID, indicating a user's desired music piece of the music pieces already stored in the memory device 110 (step S201).

Then, under the control of the CPU, the search device searches for another music piece corresponding to the representative word of the inputted music piece, on the basis of the representative word table 30 described above, and under the control of the CPU, the display device 180 displays it to a user (step S202).

### (1-6-2) In case of searching for a music piece similar to a new music piece

Simultaneously with or in tandem with the step S201 described above, under the control of the CPU, the input device 170 inputs a new, user's desired music piece that is not stored in the memory device, and the memory device stores it therein (step S203).

The, in substantially the same manner as the step S106 described above, under the control of the CPU, the extraction device 120 extracts the appearing words, with one music piece as a unit, and performs the morphologic analysis (step S204).

Then, in substantially the same manner as the step S111 described above, the calculation device 150 calculates (or determines) the representative word representative of the new music piece, on the basis of the magnitude of the vector difference calculated, and adds it to the representative word table 30 (step S205). In addition, in substantially the same manner as the step S112t described above, under the control of the CPU, for example, the memory device 110 stores therein the representative word table with the representative word added (step S112t).

Then, under the control of the CPU, the search device searches for another music piece corresponding to the representative word of the new music piece inputted, on the basis of the representative word table 30 with the representative word added, and under the control of the CPU, the display device 180 displays it to a user (step S202).

### (1-6-3) In case of searching for a music piece on the basis of a word

Simultaneously with or in tandem with the step S201 described above, under the control of the CPU, the input device 170 inputs one or a plurality of words (i.e. search words) desired by a user (step S206).

Then, in substantially the same manner as the step S111 described above, under the control of the CPU, the calculation device 150 calculates (or determines) the representative word(s) corresponding to the search word(s), on the basis of the comparison between the one or plurality of search words and the representative words registered on the representative word table 30 (step S207).

Then, under the control of the CPU, the search device searches for the music piece(s) corresponding to the determined representative word(s) on the basis of the representative word table 30 described above, and under the control of the CPU, the display device 180 displays them to a user (step S202).

In particular, for example, the representative table and the appearance word table described later may be prepared on the basis of the magnitude of the vector difference calculated on the basis of a vector Mw corresponding to the plurality of search words, such as the word "W1" and the word "W3". Specifically, for example, the magnitude of the vector difference may be calculated on the basis of the vector Mw (1, 0, 1, ..., 0) in which each of the element corresponding to the word "W1" and the element corresponding to the word "W3" is "1". As a result, it is possible to search for the desired music piece, more appropriately, on the basis of another word associated with one word.

### (2) Another embodiment of music search apparatus

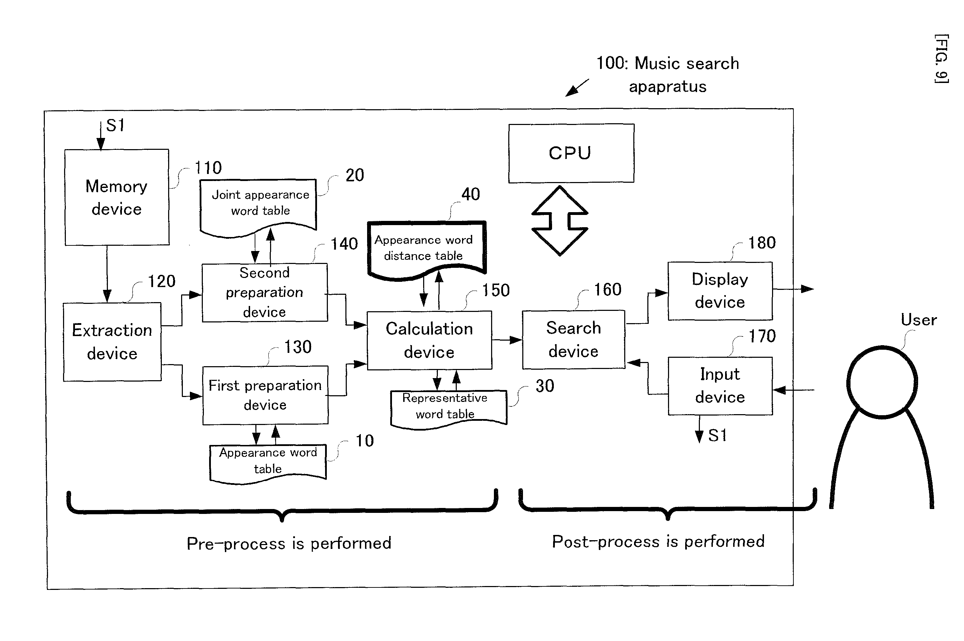

With reference to FIG. 9 to FIG. 12, a music search apparatus in another embodiment of the present invention will be explained.

### (2-1) Basic structure and operation principle

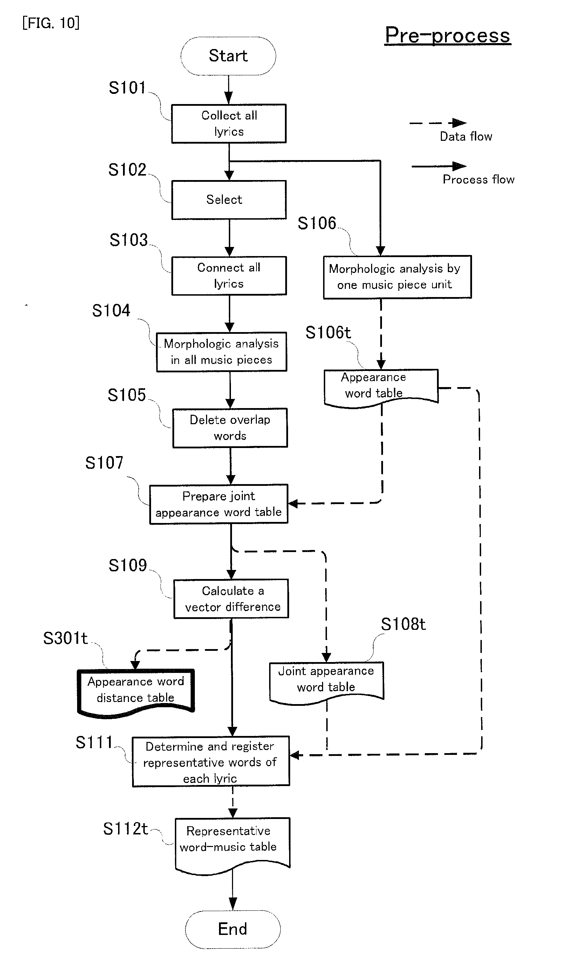

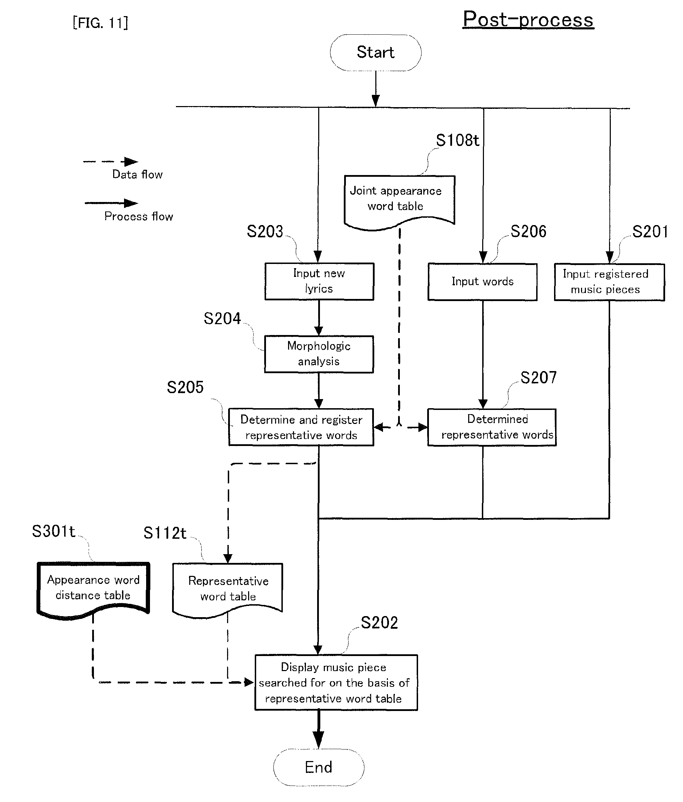

Firstly, with reference to FIG. 9, the basic structure of a music search apparatus 100 in another embodiment will be explained. FIG. 9 is a block diagram showing the basic structure of the music search apparatus 100 in another embodiment. FIG. 10 is a flowchart showing a pre-process including a first preparation process and a second preparation process, by the music search apparatus in the another embodiment. FIG. 11 is a flowchart showing a post-process displaying a result of a search for music by the music search apparatus in the another embodiment.

Incidentally, in the basic structure in the another embodiment, substantially the same constituent elements as those in the aforementioned embodiment carry the same numerical references, and the explanation thereof will be omitted, as occasion demands. Moreover, in the operation principle in the another embodiment, substantially the same processes as those in the aforementioned embodiment carry the same step numbers, and the explanation thereof will be omitted, as occasion demands.

As shown in FIG. 9, a calculation device 150 in another embodiment prepares an appearance word distance table 40. Incidentally, the details of the appearance word distance table 40 will be described later.

As shown in FIG. 10, in the pre-process, the calculation device 150 prepares the appearance word distance table 40 on the basis of the magnitude of the calculated vector difference under the control of the CPU, through the step S109 described above (step S301t).

As shown in FIG. 11, in the post-process, the search device searches for the plurality of music pieces corresponding to the other representative words in a predetermined range distant from the representative word(s) of the music pieces inputted, on the basis of the appearance word distance table 40, under the control of the CPU, through the step S201 described above, and the display device 180 displays them to a user under the control of the CPU (step S202).

### (2-2) One specific example of appearance word distance table

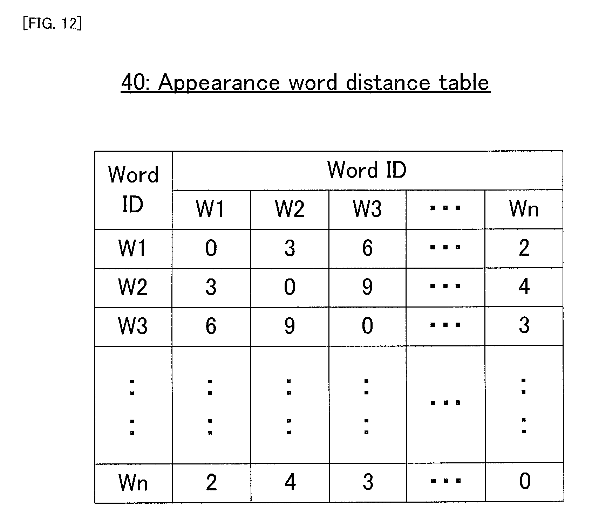

Next, with reference to FIG. 12, one specific example of the appearance word distance table in another embodiment will be explained. FIG. 12 is a table showing one specific example of the appearance word distance table in the another embodiment.

As shown in FIG. 12, the appearance word distance table 40 is prepared on the basis of the joint appearance word table 20 described above. On the appearance word distance table 40, the value indicating the magnitude of the vector difference between two words of the n-th types of words "W1" to "Wn" is registered, in the joint appearance word table 20. Specifically, with regard to the distance between the word "W1" and the word "W2", a value of "3" is set to the element of a matrix (W1, W2) and the element of a matrix (W2, W1) of the appearance word distance table 40, on the basis of the magnitude of the vector difference between the vector W1 (21, 85, 57, ..., 35) and the vector W2 (98, 43, 160, ..., 60). Moreover, the element of a matrix (Wn, Wn) in which a row number (or a line number) is equal to a column number, takes a value of "0". Subsequently, in substantially the same manner, with regard to the distance between the word "W1" and the word "W3", a value of "6" is set to the element of a matrix (W1, W3) and the element of a matrix (W3, W1) of the appearance word distance table 40, on the basis of the magnitude of the vector difference between the vector W1 (21, 85, 57, ..., 35) and the vector W3 (52, 121, 38, ..., 83).

On the appearance word distance table 40 calculated in the above manner, (Wx, Wy) and (Wy, Wx) have the same value. Moreover, since the element of (Wn, Wn) is also unnecessary data, it is possible to reduce the memory capacity if available data (or necessary data) is recorded (or stored), at least.

As a result, on the basis of the appearance word distance table 40, it is possible to search for the desired music piece, quickly and accurately.

The present invention is not limited to the aforementioned embodiments, but may be changed, if necessary, without departing from the scope or idea of the invention, which can be read from all the claims and the specification thereof. The music search apparatus and method, and the computer program for control with such a change are also included in the technical scope of the present invention.

### Industrial Applicability

The music search apparatus and method, and the computer program of the present invention can be applied to a music search apparatus for searching for a desired piece of music, from a plurality of pieces of music distributed through a network or stored in a database. Moreover, they can be also applied to a music search apparatus or the like which is mounted on various computer equipment for consumer use or for commercial use, or which can be connected to various computer equipment.

## Claims

1. A music search apparatus comprising:
a first preparing device for preparing an n-dimensional first vector corresponding to one music piece on the basis of a frequency of appearance of each of n-th types of words ("n" is a natural number), in the one music piece of a plurality of music pieces, with the n-th types of words used as a coordinate axis of an n-dimensional information space, the n-th types of words appearing in the plurality of music pieces;
a second preparing device for preparing an n-dimensional second vector corresponding to one word, on the basis of a total frequency obtained by adding (i) one frequency in which one word of the n-th types of words is combined with each word of the n-th types of words and appears in the one music piece and (ii) another frequency in which the one word is combined with the each word and appears in another music piece of the plurality of music pieces; and
a searching device for searching for a desired music piece on the basis of a magnitude of a vector difference between the first vector and the second vector.

2. The music search apparatus according to claim 1, further comprising a third preparing device for preparing a representative word table on which a representative word being representative of the one music piece corresponding to the first vector, is registered as the one word if the vector difference has the smallest magnitude,
said searching device searching for the one music piece as the desired music piece, on the basis of a comparison of a desired key word with the one word registered on the representative word table.

3. The music search apparatus according to claim 1, wherein
said first preparing device further prepares a plurality of first vectors corresponding to the respective plurality of music pieces, in a table format,
said second preparing device further prepares a plurality of second vectors corresponding to the respective n-th types of words, in a table format, and
said searching device searches for one music piece corresponding to one of first vectors as the desired music piece if the vector difference between one of second vectors and the one of first vectors has the smallest magnitude, the one of second vectors corresponding to one of the n-th types of words, which is the same or same meaning as a desired key word.

4. The music search apparatus according to claim 3, wherein said searching device searches for the plurality of music pieces corresponding to the respective plurality of first vectors, as the desired music piece, if the magnitude of the vector difference between the one of second vectors and the plurality of first vectors is in a predetermined range.

5. The music search apparatus according to claim 3, wherein said searching device (i) searches for another music piece corresponding to another first vector as the desired music piece if the vector difference between another second vector and the another first vector has the smallest magnitude, the another second vector corresponding to another word of the n-th types of words, and (ii) searches for the one or another music piece as the desired music piece if the magnitude of the vector difference between the one of second vectors and the another second vector is in a predetermined range.

6. The music search apparatus according to claim 1, further comprising an inputting device for inputting a desired key word,
said searching device searches for the desired music piece on the basis of the magnitude of the vector difference between the second vector and the first vector, the second vector corresponding to the one word, which is the same or same meaning as the inputted key word.

7. The music search apparatus according to claim 1, wherein
(i) said first preparing device prepares the first vector by grouping the plurality of music pieces on the basis of attributes of the plurality of music pieces, in addition to or in replace of
(ii) said second preparing deice prepares the second vector by grouping the n-th types of words on the basis of attributes of the n-th types of words.

8. The music search apparatus according to claim 1, further comprising:
a memory device for storing the plurality of music pieces; and
an extracting device for extracting the n-th types of words appearing the plurality of music pieces stored,
said first preparing device preparing the first vector on the basis of the n-th types of words extracted,
said second preparing device preparing the second vector on the basis of the n-th types of words extracted.

9. A music search method comprising:
a first preparing process of preparing an n-dimensional first vector corresponding to one music piece on the basis of a frequency of appearance of each of n-th types of words ("n" is a natural number), in the one music piece of a plurality of music pieces, with the n-th types of words used as a coordinate axis of an n-dimensional information space, the n-th types of words appearing in the plurality of music pieces;
a second preparing process of preparing an n-dimensional second vector corresponding to one word, on the basis of a total frequency obtained by adding (i) one frequency in which one word of the n-th types of words is combined with each word of the n-th types of words and appears in the one music piece and (ii) another frequency in which the one word is combined with the each word and appears in another music piece of the plurality of music pieces; and
a searching process of searching for a desired music piece on the basis of a magnitude of a vector difference between the first vector and the second vector.

10. A computer program for controlling a computer provided for the music search apparatus according to claim 1, said computer program making the computer function as at least one portion of said first preparing device, said second preparing device, and said searching device.
